(19) Europäisches Patentamt
European Patent Office
Office européen des brevets

(11) **EP 2 488 568 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(21) Anmeldenummer: **10768741.0**

(22) Anmeldetag: **14.10.2010**

(51) Int Cl.:
**C08G 65/329** $^{(2006.01)}$    **C08G 65/331** $^{(2006.01)}$
**C08G 83/00** $^{(2006.01)}$

(86) Internationale Anmeldenummer:
**PCT/EP2010/065374**

(87) Internationale Veröffentlichungsnummer:
**WO 2011/045357 (21.04.2011 Gazette 2011/16)**

(54) **VERFAHREN ZUR HERSTELLUNG VON HOCHVERZWEIGTEN POLYHYDROXYBENZOESÄUREALKOXYLATEN**

METHOD FOR PRODUCING HYPERBRANCHED POLYHYDROXYBENZOIC ACID ALKOXYLATES

PROCÉDÉ DE PRODUCTION D'ALCOXYLATES D'ACIDE POLYHYDROXYBENZOÏQUE HAUTEMENT RAMIFIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2009 EP 09173299**

(43) Veröffentlichungstag der Anmeldung:
**22.08.2012 Patentblatt 2012/34**

(73) Patentinhaber: **BASF SE**
**67056 Ludwigshafen (DE)**

(72) Erfinder:
• SCHÖNFELDER, Daniel
B-1000 Bruxelles (BE)
• BRUCHMANN, Bernd
67251 Freinsheim (DE)
• CRISTADORO, Anna
64646 Heppenheim (DE)
• LÖFFLER, Achim
67346 Speyer (DE)
• SCHOPOHL, Matthias
01127 Dresden (DE)
• KUNST, Andreas
67063 Ludwigshafen (DE)

(56) Entgegenhaltungen:
EP-A2- 2 003 158

• HAWKER C J ET AL: "HYPERBRANCHED POLY (ETHYLENE GLYCOL)S: A NEW CLASS OF ION-CONDUCTINGMATERIALS", MACROMOLECULES, AMERICAN CHEMICAL SOCIETY, US, Bd. 29, Nr. 11, 20. Mai 1996 (1996-05-20), Seiten 3831-3838, XP000586996, ISSN: 0024-9297, DOI: DOI:10.1021/MA951909I in der Anmeldung erwähnt

**Beschreibung**

Die Erfindung betrifft ein Verfahren zur Herstellung von hyperverzweigten Polyhydroxybenzoesäurealkoxylaten.

Dendrimere, Arborole, Starburst-Polymere oder hyperverzweigte Polymere sind Bezeichnungen für Polymere, die sich durch eine stark verzweigte Struktur und eine hohe Funktionalität auszeichnen. Dendrimere sind molekular einheitliche Makromoleküle mit einem hoch symmetrischen Aufbau. Dendrimere lassen sich, ausgehend von einem zentralen Molekül, durch kontrollierte, schrittweise Verknüpfung von mehrfach funktionellen Monomeren mit bereits gebundenen Monomeren herstellen. Dabei vervielfacht sich mit jedem Verknüpfungsschritt die Zahl der Monomerendgruppen (und damit der Verknüpfungen) um den Faktor 2 oder höher, und man erhält generationenweise aufgebaute, monodisperse Polymere mit baumartigen Strukturen, die im Idealfall kugelförmig sind und deren Äste jeweils exakt dieselbe Anzahl von Monomereinheiten enthalten. Allerdings wird die Herstellung der monodispersen Dendrimere dadurch verkompliziert, dass bei jedem Verknüpfungsschritt Schutzgruppen eingeführt und wieder entfernt werden müssen und vor Beginn jeder neuen Wachstumsstufe intensive Reinigungsoperationen erforderlich sind, weshalb man Dendrimere üblicherweise nur im Labormaßstab herstellt.

Der beschriebene generationenweise Aufbau ist erforderlich, um vollständig regelmäßig aufgebaute, dendrimere Strukturen zu erzeugen.

Im Gegensatz dazu sind hyperverzweigte Polymere sowohl molekular wie strukturell uneinheitlich. Sie werden durch einen nicht-generationenweisen Aufbau erhalten. Es ist daher auch nicht notwendig, Zwischenprodukte zu isolieren und zu reinigen. Hyperverzweigte Polymere können durch einfaches Vermischen der zum Aufbau erforderlichen Komponenten und deren Reaktion in einer sogenannten Ein-Topf-Reaktion erhalten werden. Hyperverzweigte Polymere können dendrimere Substrukturen aufweisen. Daneben weisen sie aber auch lineare Polymerketten und ungleiche Polymeräste auf. Zur Synthese der hyperverzweigten Polymere eignen sich insbesondere so genannte $AB_x$-Monomere. Diese weisen zwei verschiedene funktionelle Gruppen A und B in einem Molekül auf, die unter Bildung einer Verknüpfung intermolekular miteinander reagieren können. Die funktionelle Gruppe A ist dabei nur einmal pro Molekül enthalten und die funktionelle Gruppe B zweifach oder mehrfach. Durch die Reaktion der besagten $AB_x$-Monomere miteinander entstehen unvernetzte Polymere mit regelmäßig angeordneten Verzweigungsstellen. Die Polymere weisen an den Kettenenden fast ausschließlich B-Gruppen auf.

Weiterhin lassen sich hyperverzweigte Polymere über die $A_x$ + By- Syntheseroute herstellen. Darin stehen $A_x$ und By für zwei unterschiedliche Monomere mit den funktionellen Gruppen A und B und die Indices x und y für die Anzahl der funktionellen Gruppen pro Monomer. Bei der $A_x$ + $B_y$-Synthese, dargestellt hier am Beispiel einer $A_2$ + $B_3$-Synthese, setzt man ein difunktionelles Monomer $A_2$ mit einem trifunktionellen Monomer $B_3$ um. Dabei entsteht zunächst ein 1:1-Addukt aus A und B mit im Mittel einer funktionellen Gruppe A und zwei funktionellen Gruppen B, das dann ebenfalls zu einem hyperverzweigten Polymer reagieren kann. Auch die so erhaltenen hyperverzweigten Polymere weisen überwiegend B-Gruppen als Endgruppen auf.

Das Merkmal "hyperverzweigt" im Zusammenhang mit den Polymeren bedeutet im Sinne der Erfindung, dass der Verzweigungsgrad DB (degree of branching) der betreffenden Stoffe, der definiert ist als

$$DB\ (\%) = \frac{T+Z}{T+Z+L} \times 100,$$

wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten, 10 bis 95 %, bevorzugt 25 bis 90 % und besonders bevorzugt 30 bis 80 % beträgt.

Durch den so definierten Verzweigungsgrad unterscheiden sich die nicht-dendrimeren hyperverzweigten Polymere von den dendrimeren Polymeren. "Dendrimer" sind die Polymere dann, wenn ihr Verzweigungsgrad DB = 99 bis 100 % beträgt. Damit weist ein Dendrimer die maximal mögliche Anzahl an Verzweigungsstellen auf, welche nur durch einen hochsymmetrischen Aufbau erreicht werden kann. Zur Definition des "degree of branching" siehe auch H. Frey et al., Acta Polym. 1997, 48, 30.

Unter hyperverzweigten Polymeren werden im Rahmen dieser Erfindung also im Wesentlichen unvernetzte Makromoleküle verstanden, die strukturell uneinheitlich sind. Sie können, ausgehend von einem Zentralmolekül, analog zu Dendrimeren, jedoch mit uneinheitlicher Kettenlänge der Äste aufgebaut sein. Sie können aber auch linear mit funktionellen seitenständigen Ästen aufgebaut sein oder lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499. Weitere Angaben zu hyperverzweigten Polymeren und deren Synthese sind beispielsweise in J.M.S. - Rev. Macromol. Chem. Phys., C37(3), 555 - 579 (1997) und der dort zitierten Literatur zu finden.

C.J. Hawker et al., Hyperbranched Poly(ethylene glycol)s: A New Class of Ion-Conducting Polymers", Macromolecules 1996, 29, 3831-3838, beschreibt die Herstellung von hyperverzweigten Polyetherestern auf Basis von Oligoethylenglykolen und 3,5-Dihydroxybenzoesäuremethylester. Dabei werden in einer mehrstufigen Synthese zunächst AB$_2$-Makromonomere auf Basis von 3,5-Dihydroxybenzoesäuremethylester und Oligoethylenglykol hergestellt. Ausgehend von kommerziell erhältlichen Di-, Tri- oder Hexaethylenglykolen wird durch Umsetzung mit einem Äquivalent tert.-Butyldiphenylchlorsilan in Gegenwart von Triethylamin ein an dem einen Kettenende geschütztes Oligoethylenglykol hergestellt. Am anderen Kettenende wird durch Bromierung mit Tetrabrommethan und Triphenylphosphin die Hydroxylgruppe durch ein Bromatom substituiert. Schließlich wird das so derivatisierte Oligoethylenglykol mit 3,5-Dihydroxybenzoesäuremethylester in Gegenwart von Kaliumcarbonat und 18-Krone-6 umgesetzt. Schließlich werden die Silan-Schutzgruppen mit Chlorwasserstoff in Methanol wieder abgespalten. Das so erhaltene AB$_2$-Makromonomer wird isoliert und anschließend in Gegenwart von katalytischen Mengen von Dibutylzinndiacetat bei 160 °C in Abwesenheit eines Lösungsmittels zu hyperverzweigtem Polyetherester polykondensiert.

W. Lange und O. Kordsachia, Darstellung und Eigenschaften von aus Vanillin und Syringaaldehyd erhältlichen Polyestern, Holz als Roh- und Werkstoff 39 (1981) 107 bis 112, beschreiben die Herstellung von Polyestern auf Basis von Vanillinsäure (4-Hydroxy-3-methoxybenzoesäure) bzw. Syringasäure (4-Hydroxy-3,5-dimethoxybenzoesäure) durch Kondensation von Hydroxyethylvanillinsäure bzw. Hydroxyethylsyringasäure zum linearen Polyester. Hydroxyethylvanillinsäure bzw. Hydroxyethylsyringasäure werden in einer vorgelagerten Synthesestufe durch Umsetzung des Natriumsalzes von Vanillinsäure bzw. Syringasäure mit einem Mol Ethylenoxid erhalten. Aus den Natriumsalzen werden die Hydroxyethylethersäuren durch Zugabe von verdünnter Schwefelsäure freigesetzt. In einem Beispiel werden Vanillin- bzw. Syringasäure in Natriumhydroxidlösung gelöst, und in die Lösung wird bei 80 °C Ethylenoxid eingeleitet. Die Hydroxyethylethersäuren werden durch Zugabe von verdünnter Schwefelsäure gefällt, das ausgeschiedene Produkt wird abfiltriert, mit Wasser gewaschen, getrocknet und schließlich durch mehrmaliges Umkristallisieren gereinigt. Die Polyesterbildung wird schließlich als Schmelzkondensation im Vakuum durchgeführt.

Die Herstellung linearer Polyester durch Polykondensation von Hydroxyethylvanillinsäure durch Schmelzkondensation bei Temperaturen von 200 bis 300 °C im Vakuum wird auch in US 2,686,198 beschrieben.

DD 273 841 betrifft die Alkoxylierung von Gallussäure bzw. Gallussäurederivaten mit Propylenoxid, Ethylenoxid, Epichlorhydrin oder Tetrahydrofuran. Als Gallussäurederivat wird vorzugsweise n-Propylgallat eingesetzt. In den Ausführungsbeispielen wird in einem Autoklaven Gallussäure mit Ethylenoxid, Propylenoxid bzw. Tetrahydrofuran umgesetzt. Dabei wird, im Falle von Propylenoxid in Gegenwart von Kaliumhydroxid und, im Falle von Tetrahydrofuran, in Gegenwart von Bortrifluorid-Etherat als Katalysator gearbeitet. Die Bildung von Polyetherestem aus den Gallussäurealkoxylaten wird nicht beschrieben.

Aufgabe der Erfindung ist es, ein möglichst einfach durchzuführendes Verfahren zur Herstellung von hyperverzweigten Polyhydroxybenzoesäurealkoxylaten bereitzustellen.

Gelöst wird die Aufgabe durch ein Verfahren zur Herstellung von hyperverzweigten Polyhydroxybenzoesäurealkoxylaten umfassend die Schritte

(a) Umsetzung mindestens eines Polyhydroxybenzoesäureesters mit einem oder mehreren Alkylenoxiden gegebenenfalls in Gegenwart eines basischen Katalysators,

(b) Reagierenlassen der in Schritt a) gebildeten Polyhydroxybenzoesäurealkoxylate unter Umesterung zu hyperverzweigten Polyhydroxybenzoesäurealkoxylaten.

Das erfindungsgemäße Verfahren zeichnet sich durch seine überraschende Einfachheit aus. Die in Schritt (a) gebildeten Polyhydroxybenzoesäureesteralkoxylate reagieren ohne weiteres unter Umesterung zu den hyperverzweigten Polyhydroxybenzoesäurealkoxylaten weiter. Somit kann das erfindungsgemäße Verfahren als sogenanntes Ein-Topf-Verfahren einstufig durchgeführt werden. Eine Isolierung des in Schritt (a) gebildeten Zwischenproduktes ist nicht erforderlich.

Im Allgemeinen wird der Polyhydroxybenzoesäureester mit dem oder den Alkylenoxiden unter Druck gegebenenfalls in Gegenwart des basischen Katalysators in einem Autoklaven umgesetzt. Üblicherweise beträgt der Druck während des Alkoxylierungsschrittes a) 1 bis 15 bar, bevorzugt 3 bis 8 bar, und beträgt die Temperatur 60 bis 180.°C, bevorzugt 90 bis 120 °C. Unter diesen Bedingungen reagieren die in situ gebildeten Polyhydroxybenzoesäurealkoxylate unter Umesterung zu den hyperverzweigten Polyetherestern weiter, so dass die Schritte (a) und (b) zum Teil parallel verlaufen.

Im Allgemeinen wird die Umsetzung in Abwesenheit eines Lösungsmittels durchgeführt. Es kann jedoch auch in Gegenwart eines Lösungsmittels gearbeitet werden. Geeignete Lösungsmittel sind Toluol, Xylol und andere inerte aromatische Kohlenwasserstoffe, THF, Dioxan, andere cyclische inerte Ether, DMSO und NMP

Zur Ausbildung von hyperverzweigten Strukturen weist zumindest ein Teil der eingesetzten Polyhydroxybenzoesäureester mindestens 2 OH-Gruppen auf. Im Allgemeinen weisen die eingesetzten Polyhydroxybenzoesäureester 2 bis 3 OH-Gruppen auf. Beispiele für geeignete Polyhydroxybenzoesäureester sind die Ester der 2,3-, 2,4-, 2,5- und 2,6-Dihydroxybenzoesäure, 3,4- und 3,5-Dihydroxybenzoesäure, der 3,4,5-Trihydroxybenzoesäure (Gallussäure), der 1,3,4,5-Tetrahydroxybenzoesäure und der 1,2,3,4,5-Pentahydroxybenzoesäure. Bevorzugt sind die Ester der Gallussäure. Es können auch Gemische der genannten Polyhydroxybenzoesäureester eingesetzt werden.

Im Allgemeinen werden die Alkylester der Polyhydroxybenzoesäuren umgesetzt, bevorzugt die $C_1$-$C_6$-Alkylester. Im Falle der Methylester kann es auch zur Alkoxylierung der Carboxymethyl-Gruppe kommen, die dabei gebildeten Polyalkylenglykoletherester (welche die Gruppe -C(O)O-[CH$_2$CHRO]$_n$-H(Me) aufweisen) lassen sich weniger gut umestern. Daher sind die Alkylester ab $C_2$-Alkyl bevorzugt. Besonders bevorzugt sind die Propyl- und Butylester der Polyhydroxybenzoesäuren.

Der Polyhydroxybenzoesäureester wird in Schritt (a) mit einem oder mehreren Alkylenoxiden gegebenenfalls in Gegenwart eines basischen Katalysators umgesetzt. Bevorzugte Alkylenoxide sind Ethylenoxid, Propylenoxid, Butylenoxid und Styroloxid, besonders bevorzugt sind Ethylenoxid und Propylenoxid. Es können auch Gemische von Alkylenoxiden umgesetzt werden. Geeignete basische Katalysatoren sind Natriumhydroxid, Kaliumhydroxid, Cäsiumhydroxid, Alkalialkoholate, beispielsweise Kaliummethylat und Kalium-tert.-butylat, sowie Amin-Katalysatoren, beispielsweise Dimethylcyclohexylamin, Dimethylethanolamin, Imidazol, substituierte Imidazole und Guanidinderivate. Die Ethoxylierung von Gallussäure benötige beispielsweise keinen basischen Katalysator.

Im Allgemeinen wird die Bildung der hyperverzweigten Polyhydroxybenzoesäurealkoxylate in Schritt (b) nach Beendigung der Alkylenoxid-Zugabe durch einfaches Weiterreagierenlassen des Reaktionsgemisches vervollständigt. Diese Weiterreaktionszeit kann einige Stunden, beispielsweise 1 bis 3 Stunden betragen. Die Alkylenoxid-Zugabe erfolgt im Allgemeinen über einen Zeitraum von 0,25 bis 8 Stunden, bevorzugt 0,5 bis 5 Stunden. Die Gesamtreaktionszeit (Schritte a) und b)) beträgt im Allgemeinen 1,5 bis 15, bevorzugt 2 bis 6 Stunden. Im Allgemeinen werden 1 bis 15, vorzugsweise 1 bis 10 mol, besonders bevorzugt 1 bis 5 mol Alkylenoxid pro mol Hydroxygruppen der Polyhydroxybenzoesäure zur Reaktion gebracht.

Nach der Abreaktion wird der Autoklav entspannt und das Produktgemisch zur Entfernung von Restmonomer gestrippt. Die Aufarbeitung erfolgt bei Temperaturen von 80 - 160 °C und Drücken von 5 - 300 mbar. Optional kann das Entfernen des Alkylenoxides auch durch ein zusätzliches inertes Strippgas wie Wasserdampf oder Stickstoff unterstützt werden. Optional können störende Kationen wie z. B. Alkaliionen durch saure Ionentauscher, durch Rühren mit Adsorbentien wie z. B. Magnesiumsilikaten, oder durch Extraktion entfernt werden.

Die erhaltenen hyperverzweigten Polyhydroxybenzoesäurealkoxylate weisen im Allgemeinen ein zahlenmittleres Molekulargewicht im Bereich von 500 bis 7000 g/mol und eine Polydispersität im Bereich von 1 bis 4 auf.

Die Erfindung wird durch die nachstehenden Beispiele näher erläutert.

Beispiele

Die Produkte wurden im Elektrospray-Ionisation-Mass-Spektrometrie-Direkteinlass (ESI-MS) und mit Gelpermeationschromatographie-ESI-MS-Kupplung mit Tetrahydrofuran als Lösungsmittel vermessen.

Die OH-Zahl wurde per Titration nach der DIN 53 240 Methode bestimmt.

Beispiel 1

In einem 300 ml-Autoklaven werden 24,87 g (0,135 mol) Gallussäuremethylester und 0,3 g (0,0043 mol) Kaliummethanolat vorgelegt. Der Autoklav wird mit Stickstoff inertisiert. Das Gemisch wird 2 Stunden lang im Vakuum (< 15 mbar) bei 130 °C getrocknet. Anschließend wird Stickstoff aufgepresst und der Autoklav auf 3,5 bar entspannt. Bei einer Temperatur von 130 °C wird die Ethylenoxid-Zugabe gestartet, wobei ein deutlicher Druckanstieg beobachtet wird. Nach einiger Zeit steigt die Temperatur sprunghaft an. Nachdem die gesamte Ethylenoxid-Menge zudosiert worden ist (72,12 g entsprechend 1,75 mol) wird noch eine Stunde lang weiter reagieren gelassen. Es wird ein Produkt mit einer OH-Zahl von 236 mg KOH/g erhalten.

Das Produkt wird mittels MALDI-ToF-Analyse unter Verwendung von Hydroxybenzylidenmalonitrile (HBM) als Matrix untersucht. Es werden hyperverzweigte Oligomere mit n = 1, 2, 3,...11 Wiederholungseinheiten nachgewiesen, wobei die Hauptkomponente n = 8 Wiederholungseinheiten aufweist. Jede Wiederholungseinheit umfasst im Mittel 7 bis 8 Ethylenoxideinheiten.

Beispiel 2

In einem 300 ml-Autoklaven werden 24,88 g (0,135 mol) Gallussäuremethylester und 0,98 g (0,011 mol) Dimethylethanolamin vorgelegt. Der Autoklav wird mit Stickstoff inertisiert. Nach Aufpressen von Stickstoff wird der Autoklav auf 3,5 bar entspannt. Bei einer Temperatur von 100 °C wird mit der Zugabe von insgesamt 137,7 g (3,13 mol) Ethylenoxid begonnen. Der Druck steigt schnell an, nach kurzer Zeit steigt auch die Temperatur sprunghaft an. Nach beendeter Ethylenoxid-Zugabe wird noch 2 Stunden weiter reagieren gelassen. Es wird ein Produkt mit einer OH-Zahl von 264 mg KOH/g erhalten.

Beispiel 3

In einem 300 ml-Autoklaven werden 62,9 g (0,296 mol) Gallussäurepropylester und 0,68 g (0,006 mol) Kalium-tert.-butylat vorgelegt. Der Autoklav wird mit Stickstoff inertisiert. Das Reaktionsgemisch wird bei 130 °C im Vakuum (< 15 mbar) getrocknet. Nach Aufpressen von Stickstoff wird der Autoklav auf 3,5 bar entspannt. Bei 130 °C wird die Zugabe von insgesamt 157,14 g (2,71 mol) Propylenoxid gestartet. Nach einer Reaktionszeit von 19 Stunden wird ein Produkt mit einer OH-Zahl von 238 mg KOH/g erhalten.

Beispiel 4

In einem 300 ml-Autoklaven werden 62,9 g (0,296 mol) Gallussäurepropylester und 0,66 g (0,006 mol) Kalium-tert.-butylat vorgelegt. Der Autoklav wird mit Stickstoff inertisiert. Das Reaktionsgemisch wird bei 110 °C im Vakuum (< 15 mbar) getrocknet. Nach Aufpressen von Stickstoff wird der Autoklav auf 3,5 bar entspannt. Bei 110 °C wird die Dosierung von insgesamt 157,14 g (3,57 mol) gestartet. Nach Zugabe von ca. der halben Ethylenoxid-Menge wird ein plötzlicher Druck- und Temperaturanstieg beobachtet. Nach Zugabe der gesamten Ethylenoxid-Menge reagiert das Ethylenoxid schnell ab, und nach einer Reaktionszeit von insgesamt 10 Stunden wird ein Produkt mit einer OH-Zahl von 220 mg KOH/g erhalten.

Das Produkt wird mittels MALDI-ToF-Analyse unter Verwendung von Hydroxybenzylidenmalonitrile (HBM) als Matrix untersucht. Es werden Oligomere mit n = 1 bis 11 Wiederholungseinheiten nachgewiesen. Jede Wiederholungseinheit umfasst im Mittel ca. 7 bis 8 Ethylenoxid-Einheiten. Es werden keine Nebenprodukte nachgewiesen.

Die Verteilung der einzelnen Oligomere wird mittels GPC-MS bestimmt. Das Maximum der Verteilung liegt bei n = 8 (Octamer).

**Patentansprüche**

1. Verfahren zur Herstellung von hyperverzweigten Polyhydroxybenzoesäurealkoxylaten umfassend die Schritte:

   (a) Umsetzung mindestens eines Polyhydroxybenzoesäureesters mit einem oder mehreren Alkylenoxiden, optional in Gegenwart eines basischen Katalysators,
   (b) Reagierenlassen der in Schritt (a) gebildeten Polyhydroxybenzoesäureesteralkoxylate unter Umesterung zu hyperverzweigten Polyhydroxybenzoesäurealkoxylaten.

2. Verfahren nach Anspruch 1, **dadurch gekennzeichnet, dass** der Polyhydroxybenzoesäureester 2 bis 3 OH-Gruppen aufweist.

3. Verfahren nach Anspruch 2, **dadurch gekennzeichnet, dass** der Polyhydroxybenzoesäureester ein Gallussäureester ist.

4. Verfahren nach einem der Ansprüche 1 bis 3, **dadurch gekennzeichnet, dass** der Polyhydroxybenzoesäureester ein Polyhydroxybenzoesäure-$C_1$-$C_6$-alkylester ist.

5. Verfahren nach einem der Ansprüche 1 bis 4, **dadurch gekennzeichnet, dass** der Polyhydroxybenzoesäureester ein Polyhydroxybenzoesäurepropylester oder -butylester ist.

6. Verfahren nach einem der Ansprüche 1 bis 5, **dadurch gekennzeichnet, dass** das Alkylenoxid ausgewählt ist aus der Gruppe bestehend aus Ethylenoxid, Propylenoxid, Butylenoxid und Styroloxid.

7. Verfahren nach einem der Ansprüche 1 bis 6, **dadurch gekennzeichnet, dass** der basische Katalysator ein Alkalihydroxid, ein Alkalialkoholat oder ein Amin ist.

8. Verfahren nach einem der Ansprüche 1 bis 7, **dadurch gekennzeichnet, dass** in Schritt (a) pro mol OH-Gruppen des Polyhydroxybenzoesäureesters 1 bis 15 mol Alkylenoxid umgesetzt werden.

9. Verfahren nach einem der Ansprüche 1 bis 8, **dadurch gekennzeichnet, dass** es einstufig ohne Isolierung des in Schritt (a) gebildeten Zwischenprodukts durchgeführt wird.

10. Hyperverzweigte Polyhydroxybenzoesäurealkoxylate, erhältlich nach dem Verfahren gemäß einem der Ansprüche 1 bis 9.

**Claims**

1. A process for preparing hyperbranched polyhydroxybenzoic acid alkoxylates, comprising the steps of:

   (a) reacting at least one polyhydroxybenzoic ester with one or more alkylene oxides, optionally in the presence of a basic catalyst,
   (b) allowing the polyhydroxybenzoic ester alkoxylates formed in step (a) to react with transesterification to form hyperbranched polyhydroxybenzoic acid alkoxylates.

2. The process according to claim 1, wherein the polyhydroxybenzoic ester has 2 to 3 OH groups.

3. The process according to claim 2, wherein the polyhydroxybenzoic ester is a gallic ester.

4. The process according to any of claims 1 to 3, wherein the polyhydroxybenzoic ester is a $C_1$-$C_6$-alkyl polyhydroxybenzoate.

**5.** The process according to any of claims 1 to 4, wherein the polyhydroxybenzoic ester is a propyl or butyl polyhydroxybenzoate.

**6.** The process according to any of claims 1 to 5, wherein the alkylene oxide is selected from the group consisting of ethylene oxide, propylene oxide, butylene oxide and styrene oxide.

**7.** The process according to any of claims 1 to 6, wherein the basic catalyst is an alkali metal hydroxide, an alkali metal alkoxide or an amine.

**8.** The process according to any of claims 1 to 7, wherein 1 to 15 mol of alkylene oxide are converted in step (a) per mole of OH groups of the polyhydroxybenzoic ester.

**9.** The process according to any of claims 1 to 8, which is performed in one stage without isolation of the intermediate formed in step (a).

**10.** A hyperbranched polyhydroxybenzoic acid alkoxylate obtainable by the process according to any of claims 1 to 9.

## Revendications

**1.** Procédé pour la préparation d'alcoxylates hyperramifiés de l'acide polyhydroxybenzoïque, comprenant les étapes :

> (a) transformation d'au moins un ester de l'acide polyhydroxybenzoïque avec un ou plusieurs oxydes d'alkylène, éventuellement en présence d'un catalyseur basique,
> (b) réaction des alcoxylates de l'acide polyhydroxybenzoïque formés dans l'étape (a) avec transestérification en alcoxylates hyperramifiés de l'acide polyhydroxybenzoïque.

**2.** Procédé selon la revendication 1, **caractérisé en ce que** l'ester de l'acide polyhydroxybenzoïque présente 2 à 3 groupes OH.

**3.** Procédé selon la revendication 2, **caractérisé en ce que** l'ester de l'acide polyhydroxybenzoïque est un ester de l'acide biliaire.

**4.** Procédé selon l'une quelconque des revendications 1 à 3, **caractérisé en ce que** l'ester de l'acide polyhydroxybenzoïque est un ester $C_1$-$C_6$-alkylique de l'acide biliaire.

**5.** Procédé selon l'une quelconque des revendications 1 à 4, **caractérisé en ce que** l'ester de l'acide polyhydroxybenzoïque est un ester propylique ou un ester butylique de l'acide polyhydroxybenzoïque.

**6.** Procédé selon l'une quelconque des revendications 1 à 5, **caractérisé en ce que** l'oxyde d'alkylène est choisi dans le groupe constitué par l'oxyde d'éthylène, l'oxyde de propylène, l'oxyde de butylène et l'oxyde de styrène.

**7.** Procédé selon l'une quelconque des revendications 1 à 6, **caractérisé en ce que** le catalyseur basique est un hydroxyde de métal alcalin, un alcoolate de métal alcalin ou une amine.

**8.** Procédé selon l'une quelconque des revendications 1 à 7, **caractérisé en ce que** dans l'étape (a), on transforme par mole de groupes OH de l'ester de l'acide polyhydroxybenzoïque, 1 à 15 moles d'oxyde d'alkylène.

**9.** Procédé selon l'une quelconque des revendications 1 à 8, **caractérisé en ce qu'**il est réalisé en une étape sans isolement du produit intermédiaire formé dans l'étape (a).

**10.** Alcoxylates hyperramifiés de l'acide polyhydroxybenzoïque pouvant être obtenus selon le procédé selon l'une quelconque des revendications 1 à 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2686198 A

- DD 273841

**In der Beschreibung aufgeführte Nicht-Patentliteratur**

- **H. FREY et al.** *Acta Polym.,* 1997, vol. 48, 30
- **P.J. FLORY.** *J. Am. Chem. Soc.,* 1952, vol. 74, 2718
- **H. FREY et al.** *Chem. Eur. J.,* 2000, vol. 6 (14), 2499
- *J.M.S. - Rev. Macromol. Chem. Phys.,* 1997, vol. C37 (3), 555-579

- **C.J. HAWKER et al.** Hyperbranched Poly(ethylene glycol)s: A New Class of Ion-Conducting Polymers. *Macromolecules,* 1996, vol. 29, 3831-3838
- Darstellung und Eigenschaften von aus Vanillin und Syringaaldehyd erhältlichen Polyestern. **W. LANGE ; O. KORDSACHIA.** olz als Roh- und Werkstoff. 1981, vol. 39, 107-112